# EUROPÄISCHE PATENTSCHRIFT

(11) **EP 4 263 313 B1**
(45) Veröffentlichungstag und Bekanntmachung des Hinweises auf die Patenterteilung: **31.07.2024**
(21) Anmeldenummer: 21840460.6
(22) Anmeldetag: 15.12.2021
(51) Int. Cl.: B61B 1/00, B61B 12/06, H04B 3/00

(54) **SEILBAHN MIT FAHRZEUG MIT EINEM VERSCHLUSSANTRIEB UND FEHLERSICHERER VERRIEGELUNGSÜBERWACHUNG**
CABLEWAY WITH A VEHICLE HAVING A CLOSURE DRIVE AND FAILSAFE LOCKING MONITORING
TÉLÉPHÉRIQUE COMPORTANT UN VÉHICULE DOTÉ D'UNE COMMANDE DE FERMETURE ET D'UNE SURVEILLANCE INFAILLIBLE DE VERROUILLAGE

(30) Priorität: 17.12.2020 AT 511092020
(43) Veröffentlichungstag der Anmeldung: 25.10.2023
(73) Patentinhaber: Innova Patent GmbH, 6922 Wolfurt (AT)
(72) Erfinder: PFEIFER, Daniel, 6580 Sankt Anton am Arlberg (AT); MOHR, Clemens, 6922 Wolfurt (AT); NAGEL, Helmut, 6973 Höchst (AT)
(74) Vertreter: Patentanwälte Pinter & Weiss OG
(86) Internationale Anmeldenummer: PCT/EP2021/085818
(87) Internationale Veröffentlichungsnummer: WO 2022/129123

(56) Entgegenhaltungen:
- EP-A1- 2 067 682
- EP-A1- 3 476 686
- WO-A1-2018/228965
- JP-A- 2020 083 234
- JP-A- H02 231 263
- US-A1- 2010 085 183
- US-A1- 2020 101 986

## Beschreibung

Die gegenständliche Erfindung betrifft ein Verfahren zum Betreiben einer Seilbahn mit zumindest einem Fahrzeug, wobei zumindest in einer Station der Seilbahn eine Verschlusseinrichtung des Fahrzeugs mit einem Verschlussantrieb geschlossen wird und die verschlossene Verschlusseinrichtung durch eine Verrieglungseinheit verriegelt wird, wobei ein Verriegelungsstatus der Verrieglungseinheit von einer Verriegelungsüberwachung erfasst und an eine Seilbahnsteuerung übermittelt wird, und das Ausfahren des Fahrzeugs aus der Station im Falle einer fehlerhaften Verriegelung durch die Seilbahnsteuerung verhindert wird. Die Erfindung betrifft ebenso eine entsprechend ausgeführte Seilbahn.

Seilbahnen werden oftmals zum Transport von Personen verwendet. Dazu wird eine Anzahl von seilgezogenen Fahrzeugen der Seilbahn zwischen zumindest zwei Stationen bewegt. Typische Seilbahnen sind Luftseilbahnen mit an einem Trag- oder Förderseil in der Luft hängenden Fahrzeugen, wie Gondeln, Kabinen oder Sessel, oder Standseilbahnen mit auf Schienen oder anderen Fahrwegen fahrenden, seilgezogenen Fahrzeugen. Fahrzeuge einer Seilbahn umfassen in der Regel Verschlusseinrichtungen, beispielsweise Türen, typischerweise bei Gondeln, Kabinen oder Schienenfahrzeugen, oder Schließbügel, typischerweise bei Sesseln, die verhindern sollen, dass beförderte Personen zwischen den Stationen das Fahrzeug verlassen können. Dazu werden die geschlossenen Verschlusseinrichtungen in den Stationen vor Abfahrt auch verriegelt und die Verriegelung überwacht, um ein unabsichtliches oder missbräuchliches Öffnen der Verschlusseinrichtung zu verhindern. Erst wenn die Verriegelung bestätigt wird, kann das Fahrzeug die Station verlassen. Gängige Verriegelungen sind mechanische Verriegelungen, beispielsweise eine Raste, Falle oder Klinke die bei geschlossener Verschlusseinrichtung einrastet. Der Rastzustand wird dabei ebenfalls oftmals mechanisch geprüft oder abgetastet, beispielsweise mittels eines Rollenhebels. Diese rein mechanischen Lösungen sind jedoch mechanisch aufwendig, sensibel in der Einstellung und können auch zu unbeabsichtigter Fehlbedienung führen. Beispielsweise kann es passieren, dass der Benutzer den Fehler machen kann, dass er die mechanische Einrichtung der Verriegelung einfach zurückstellt, ohne die Türe zu verriegeln.

Es sind daher auch schon elektronische bzw. elektrische Verrieglungsüberwachungen bekannt geworden. Die grundsätzliche Schwierigkeit einer elektrischen Verrieglungsüberwachung ist, die Verrieglungsüberwachung fehlersicher im Sinne einer funktionalen Sicherheit auszuführen. Die Verrieglungsüberwachung muss dazu ein bestimmtes Sicherheitsniveau erreichen, beispielsweise eine bestimmte Sicherheitsanforderungsstufe (SIL) nach EN 61 508. In einer elektrischen Ausführung der Verrieglungsüberwachung wird die Verriegelung mittels elektrischer Kontakte (Endschalter) überwacht und der Status der elektrischen Kontakte an die Seilbahnsteuerung übermittelt. Die elektrischen Kontakte und die Seilbahnsteuerung können einfach fehlersicher gemacht werden, beispielsweise durch redundante Kontakte und einer fehlersicheren Steuerung. Der Übertragungskanal zwischen den Kontakten und der Seilbahnsteuerung ist bei einfachen Übertragungssystemen hingegen im Sinne der funktionalen Sicherheit nicht fehlersicher. Der Verriegelungsstatus kann bei fehlender funktionaler Sicherheit beispielsweise über den nicht sicheren Übertragungskanal fehlerhaft an die Steuerung übertragen werden, beispielsweise erhält die Steuerung die Information der erfolgten Verriegelung, obwohl die Verriegelung nicht ordnungsgemäß erfolgte. Daher müssen andere Maßnahmen gesetzt werden, um die Verrieglungsüberwachung der Verschlusseinrichtung fehlersicher zu machen. Hierbei muss insbesondere sichergestellt werden, dass das Fahrzeug die Station ohne Verriegelung nicht verlassen kann.

Wenn die Verschlusseinrichtung nicht verriegelt ist, muss die Ausfahrt des Fahrzeugs aus der Station aus Sicherheitsgründen verhindert werden. Daher wird bei fehlerhafter Verriegelung dem Bedienpersonal der Seilbahn in der Regel eine Fehlermeldung angezeigt und die Seilbahn gestoppt. Das Bedienpersonal muss dann die Verschlusseinrichtung des vor der Ausfahrt stehenden Fahrzeugs prüfen und nach Prüfen bzw. Beseitigen des Fehlers die Fehlermeldung quittieren. Erst nach dem Quittieren der Fehlermeldung kann die Seilbahn wieder gestartet werden und das Fahrzeug kann aus der Station ausfahren. In der Praxis hat es sich aber gezeigt, dass das Bedienpersonal, insbesondere in Stresssituationen, einen Fehler machen kann und einen derartigen Fehler nur unzureichend prüft, den Fehler nicht behebt oder die Fehlermeldung sogar ohne Prüfung quittiert, was dazu führt, dass das Fahrzeug die Station ohne Verriegelung der Verschlusseinrichtung verlässt.

Daher ist in der WO 2018/228965 A1 vorgesehen, nach einem Anfahren des Fahrzeugs, den Verriegelungsstatus erneut abzufragen. Diese zweite Abfrage erfolgt in der Station derart, dass die Ausfahrt des Fahrzeugs aus der Station noch verhindert werden kann, wenn in der zweiten Abfrage eine nicht erfolgte Verriegelung erkannt wurde. Durch die doppelte Abfrage kann die erforderliche Fehlersicherheit erreicht werden. Der Übertragungskanal wird in der WO 2018/228965 A1 als nicht fehlersicherer Funkkanal, beispielsweise mit RFID Transpondern, ausgeführt. Bei Verwendung von passiven Transpondern kann damit auch auf eine Stromversorgung am Fahrzeug verzichtet werden. Die Verwendung eines Funkkanals macht dieses System aufwendiger und komplexer, weil in der Station und am Fahrzeug gegenüber den ohnehin vorhandenen technischen Einrichtungen, zusätzliche Einrichtungen benötigt werden. Abgesehen davon ist die RFID Übertragung empfindlich gegen die rauen Umgebungsbedingungen (Temperaturen, Nässe, Eis, Schnee usw.) im Umfeld einer Seilbahn, was sich negativ auf die Verfügbarkeit des Übertragungskanals auswirken kann. Insbesondere bei sicherheitskritischen Anwendungen, wie einer Türverriegelungsüberwachung, kann das ein Problem darstellen.

Es ist daher eine Aufgabe der gegenständlichen Erfindung, eine mit einfacheren Mitteln umsetzbare und zuverlässige elektrische Verrieglungsüberwachung einer Verschlusseinrichtung eines Fahrzeugs einer Seilbahn anzugeben.

Diese Aufgabe wird mit den Merkmalen der unabhängigen Ansprüche gelöst. Die Erfindung nutzt eine Powerline Kommunikation zur Übermittlung des Verriegelungsstatus an die Seilbahnsteuerung. Damit können bestehende Einrichtungen, insbesondere elektrische Leitungen und Verbindung, der Seilbahn für die Powerline Kommunikation genutzt werden. Es sind lediglich Powerlinemodems und gegebenenfalls ein kleiner elektrischer Pufferspeicher vorzusehen, was aber nur wenig Aufwand und Kosten verursacht. Durch die Anordnung der Stromschiene, vorzugsweise das Vorsehen von zwei Stromschienen hintereinander, kann sichergestellt werden, dass das Fahrzeug nicht mit einer fehlerhaften Verriegelung aus der Station ausfährt. Das Fahrzeug wird im Bereich einer Stromschiene gestoppt und ein Anfahren der Seilbahn ist erst nach Herstellung einer Verriegelung bzw. Herstellung eines sicheren Zustandes möglich. Nachdem das Fahrzeug jedenfalls im Bereich einer Stromschiene stoppt, kann der Verriegelungsstatus mittels Powerline Kommunikation abgefragt werden. Damit kann sicher verhindert werden, dass ein Fahrzeug ohne ordnungsgemäße Verriegelung der Verschlusseinrichtung die Station verlässt.

Vorzugsweise wird die Verriegelungsauswerteeinheit und das Fahrzeug-Powerlinemodem über die erste oder zweite Stromschiene mit elektrischer Energie versorgt. Damit kann die elektrische Energie zur Powerline Kommunikation über die Stromschiene erhalten werden und es ist lediglich ein klein dimensionierter elektrischer Pufferspeicher von Nöten, um während einer kurzen Zeitspanne die Powerline Kommunikation trotz inaktiver Stromschiene aufrecht erhalten zu können.

Es ist ferner vorteilhaft, wenn die Stromschiene zur elektrischen Versorgung der Verschlusseinrichtung dient, indem der Stromabnehmer des Fahrzeugs bei Durchfahrt durch die Station in einer Bewegungsrichtung vor dem Schließen der Verschlusseinrichtung die erste Stromschiene kontaktiert und der Verschlussantrieb als elektrischer Antrieb ausgeführt wird, wobei der elektrische Verschlussantrieb über die erste Stromschiene mit elektrischer Energie versorgt wird. Dabei ist es vorteilhaft, wenn die Stromschiene erst dann aktiviert wird, wenn der Stromabnehmer die Stromschiene bereits kontaktiert, weil damit Funkenschlag verhindert werden kann.

Nach dem Verschließen und Verriegeln der Verschlusseinrichtung und vor dem Senden des Verriegelungsstatus kann die Stromschiene deaktiviert werden, weil der Verschlussantrieb nicht mehr benötigt wird. Um dann den Verriegelungsstatus mit der Powerline Kommunikation übermitteln zu können, wird die Verriegelungsauswerteeinheit und das Fahrzeug-Powerlinemodem dafür von einer elektrischen Energieversorgung am Fahrzeug mit elektrischer Energie versorgt. Damit kann auch sichergestellt werden, dass die Stromschiene deaktiviert ist, wenn der Stromabnehmer den Kontakt mit der Stromschiene verliert, wodurch Funkenschlag verhindert werden kann.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine Station einer Seilbahn mit einem Fahrzeug mit einer Verschlusseinrichtung und einer Verriegelungsüberwachung,
Fig.2 eine erfindungsgemäße Powerline Kommunikation zwischen Fahrzeug und Seilbahnstation und
Fig.3 eine vorteilhafte Ausgestaltung einer Verriegelungsüberwachung der Verschlusseinrichtung.

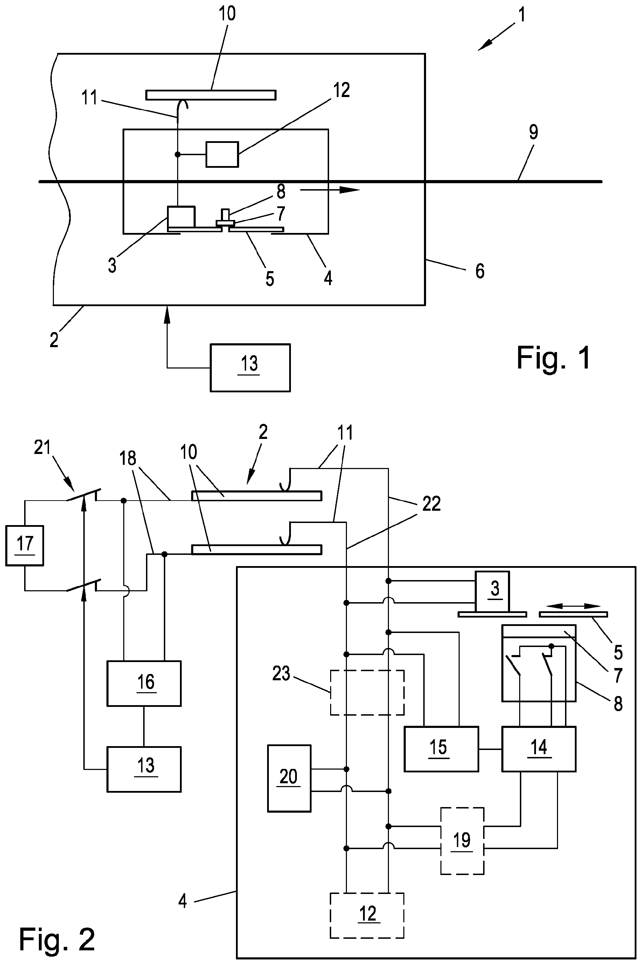

In Fig.1 ist eine erste Station 2 einer Seilbahn 1 angedeutet. Hinlänglich bekannte Einrichtungen der Seilbahn 1 in der Station 2, wie beispielsweise eine Umlenkscheibe für ein Seil 9, ein Seilantrieb oder Spannvorrichtungen für die Umlenkscheibe, ein Förderantrieb zum Bewegen von vom Seil abgekoppelten Fahrzeugen usw., am Fahrzeug 4, wie beispielsweise ein Gehänge, Kuppelklemmen usw., und auf der Strecke, wie beispielsweise Stützen mit Tragrollen für das Seil 9 usw., oder eine zweite Station sind nicht dargestellt, da für die Erfindung nicht relevant. Mit dem Seil 9 wird zumindest ein Fahrzeug 4 zwischen der ersten Station 2 und einer nicht dargestellten zweiten Station befördert. Dazu kann das Fahrzeug 4 mit dem Seil 9 ebenfalls in hinlänglich bekannter Weise fix verbunden sein oder vom Seil mittels federbetätigter Kuppelklemmen abkoppelbar sein. Die Verbindung des Fahrzeugs 4 mit dem Seil 9, beispielsweise in Form eines Gehänges, ist ebenso bekannt und daher nicht dargestellt. Die Erfindung wird nachfolgend ohne Einschränkung der Allgemeinheit am Beispiel einer Kabine als Fahrzeug 4 und mit Schiebetüren als Verschlusseinrichtung 5 beschrieben.

In der Station 2 wird die Verschlusseinrichtung 5 geöffnet, um das Aus- und Zusteigen von Passagieren zu ermöglichen. Das Fahrzeug 4 kann dazu in der Station 2 stillstehen oder mit niedriger Geschwindigkeit durch die Station 2 bewegt werden. Vor der Stationsausfahrt 6 der Station 2 wird die Verschlusseinrichtung 5 mittels eines Verschlussantriebs 3 geschlossen. Der Verschlussantrieb 3 kann elektrisch oder mechanisch ausgeführt sein. Der elektrische Verschlussantrieb 3 kann ein beliebiger elektrischer Antrieb sein, der zum Öffnen / Schließen in Wirkverbindung mit der Verschlusseinrichtung 5 steht und umfasst auch eine Verschlusssteuerung. Ein mechanischer Verschlussantrieb 3 nutzt beispielsweise eine Relativbewegung zwischen dem Fahrzeug und der Station um die Verschlusseinrichtung 5 über Rollen, Hebel, Seilzug oder ähnliche Betätigungsmittel zu betätigen. Der elektrische Verschlussantrieb 3 kann in der Station 2 von der Station 2 mit elektrischer Energie versorgt werden. Ebenso ist es denkbar, dass am Fahrzeug 4 eine elektrische Energieversorgung vorgesehen ist, die den elektrischen Verschlussantrieb 3 mit elektrischer Energie versorgt.

Zur elektrischen Versorgung des Fahrzeugs 4, oder eines anderen elektrischen Verbrauchers 12 des Fahrzeugs 4 (wie z.B. der elektrische Verschlussantrieb 3), in der Station 2 kann auch eine Stromschiene 10 (auch mehrphasig) vorgesehen sein. Dazu ist am Fahrzeug 4 ein Stromabnehmer 11, beispielsweise ein Schleifkontakt (auch mehrphasig), vorgesehen, der die Stromschiene 10 elektrisch kontaktiert. Während der Stromversorgung über die Stromschiene 10 kann der elektrische Verschlussantrieb 3 betätigt werden, um die Verschlusseinrichtung 5 zu öffnen oder zu schließen. Die Stromschiene 10 ist vorzugsweise ortsfest in der Station 2 angeordnet, beispielswiese einem ortsfesten Bauteil der Station 2.

Es können in der Station 2 natürlich mehrere Stromschienen 10 vorgesehen sein. Beispielsweise eine erste Stromschiene im Bereich vor einer Einstiegs- und Ausstiegsstelle oder nach einer Stationseinfahrt, um den elektrischen Verschlussantrieb 3 zum Öffnen der Verschlusseinrichtung 5 mit elektrischer Energie versorgen zu können. Im Bereich vor der Stationsausfahrt 6 aus der Station 2 kann eine weitere Stromschiene 10 vorgesehen sein, um den Verschlussantrieb 3 zum Schließen der Verschlusseinrichtung 5 mit elektrischer Energie versorgen zu können. Es kann aber natürlich auch nur eine einzige Stromschiene 10 zur elektrischen Versorgung des elektrischen Verschlussantriebs 3 in der Station 2 vorgesehen sein.

Natürlich kann die elektrische Versorgung über eine Stromschiene 10 in der Station 2 bedarfsweise auch zur elektrischen Versorgung anderer elektrischer Verbraucher 12 des Fahrzeugs 4 verwendet werden, auch ohne elektrischen Verschlussantrieb 3, oder auch zum Laden eines Energiespeichers 20 am Fahrzeug 4.

Am Fahrzeug 4 ist eine Verrieglungseinheit 7 vorgesehen, mit der die geschlossene Verschlusseinrichtung 5 verriegelt wird, sodass ein unabsichtliches oder missbräuchliches Öffnen der Verschlusseinrichtung 5 verhindert wird. Die Verriegelung kann mechanisch oder elektrisch erfolgen. Im Falle einer elektrischen Verrieglungseinheit 7 kann diese ebenso wie der Verschlussantrieb 3 der Verschlusseinrichtung 5 über eine Stromschiene 10 oder einem Energiespeicher 20 am Fahrzeug 4 mit elektrischer Energie versorgt werden. Die Verriegelungseinheit 7 kann im Verschlussantrieb 3 integriert sein und kann auch von der Verschlusssteuerung des Verschlussantriebs 3 gesteuert werden.

Ferner ist am Fahrzeug 4 eine Verrieglungsüberwachung 8 vorgesehen, die den Zustand der Verriegelungseinheit 7 erfasst. Die Verrieglungsüberwachung 8 ist als Sensor, beispielsweise als elektrischer Endschalter mit Doppelkontakt (Öffner, Schließer), ausgeführt, der den Zustand der Verriegelungseinheit 7 erfasst, also ob die Verriegelung erfolgt ist oder nicht. Die Verriegelungsüberwachung 8 kann natürlich auch die erfolgreiche Entriegelung erfassen, beispielsweise im Bereich vor einer Einstiegs- und Ausstiegsstelle der Station 2. Die Art und das Wirkprinzip des Sensors zur Verrieglungsüberwachung 8 ist für die Erfindung allerdings unerheblich. Die Verrieglungsüberwachung 8 übermittelt den erfassten Verriegelungsstatus an eine Seilbahnsteuerung 13, die zumindest eine Funktion der Seilbahn 1 in Abhängigkeit vom Verriegelungsstatus steuert. Insbesondere wird das Ausfahren des Fahrzeugs 4 aus der Station 2 in Abhängigkeit vom Verriegelungsstatus gesteuert, wie nachfolgend noch im Detail ausgeführt wird. Die Seilbahnsteuerung 13 kann an einer beliebigen Stelle der Seilbahn 1 angeordnet sein, entweder in der ersten Station 2 oder einer anderen Station. Auch eine verteilte Steuerung der Seilbahn 1, mit mehreren in Verbindung stehenden Steuereinheiten, ist als Seilbahnsteuerung 13 grundsätzlich denkbar.

Die Seilbahnsteuerung 13, oder eine einzelne Steuereinheit der Seilbahnsteuerung, kann als prozessorbasierte Hardware ausgeführt sein, auf der Steuersoftware läuft, beispielsweise ein Computer, ein Mikrocontroller oder eine speicherprogrammierbare Steuerung. Auch eine Implementierung als integrierter Schaltkreis (IC), beispielsweise als anwendungsspezifische integrierte Schaltung (ASIC) oder Field Programmable Gate Array (FPGA), ist denkbar. Einzelnen Steuereinheiten können auch als analoge Schaltkreise implementiert sein. Ebenso sind Mischformen möglich.

Zur Übermittlung des Verriegelungsstatus von der Verrieglungsüberwachung 8 zur Seilbahnsteuerung 13 ist vorgesehen, vorzugsweise vorhandene elektrische Leitungen, beispielsweise zur elektrischen Versorgung des elektrischen Verschlussantriebs 3 und/oder eines Verbrauchers 12 des Fahrzeugs 4, zum Aufbau eines lokalen Datenkommunikationsnetzwerks zur Datenübertragung zu nutzen, so dass keine zusätzliche Verkabelung notwendig ist. Hierfür kann beispielsweise eine, standardisierte oder proprietäre, Powerline Kommunikation verwendet werden, wie anhand von Fig.2 näher erläutert wird.

Die Signale der Verrieglungsüberwachung 8 (im Beispiel nach Fig.2 ein Endschalter mit Doppelkontakt) werden in einer Verriegelungsauswerteeinheit 14 ausgewertet. Der Verriegelungsstatus als Ergebnis der Auswertung in der Verriegelungsauswerteeinheit 14 wird mit einem Fahrzeug-Powerlinemodem 15 übertragen. Das Fahrzeug-Powerlinemodem 15 kann natürlich auch in der Verriegelungsauswerteeinheit 14 integriert sein. Das Fahrzeug-Powerlinemodem 15 ist dazu mit dem Stromabnehmer 11 verbunden, beispielsweise über die elektrische Zuleitung 22 zum Fahrzeug 4, die wiederum mit dem Stromabnehmer 11 verbunden ist. Auf Stationsseite ist die erste Stromschiene 10 mit einem ersten Station-Powerlinemodem 16 verbunden, das mit der Seilbahnsteuerung 13 in Verbindung steht. Das Station-Powerlinemodem 16 kann natürlich auch in der Seilbahnsteuerung 13 integriert sein.

Auf Stationsseite kann die Stromschiene 10 (in Fig.2 zweiphasig für Phase und Nullleiter) über eine elektrische Versorgungsleitung 18 (in Fig.2 zweiphasig) von einer elektrischen Stromversorgung 17 der Seilbahn 1 mit elektrischer Energie versorgt werden, beispielsweise mit ±24VDC. An die Versorgungsleitung 18 kann das erste Station-Powerlinemodem 16 angeschlossen werden.

Die elektrische Versorgung der Stromschiene 10 kann mit einer Trenneinheit 21 auch unterbrochen werden, beispielsweise gesteuert von der Seilbahnsteuerung 13. Die Trenneinheit 21 ist so vorzusehen, dass dadurch die elektrische Verbindung zwischen dem Station-Powerlinemodem 16 und der Stromschiene 10 nicht unterbrochen wird, sondern nur die elektrische Versorgung der Stromschiene 10.

Für die Powerline Kommunikation ist es aber nicht zwingend erforderlich, dass die Stromschiene 10 von einer Stromversorgung aktiv bestromt wird. Die Stromschiene 10 kann auch nur zur Powerline Kommunikation vorgesehen sein, oder zum Zeitpunkt der Powerline Kommunikation von der Stromversorgung 17 getrennt sein.

Wenn der Stromabnehmer 11 des Fahrzeugs 4 die erste Stromschiene 10 elektrisch kontaktiert, besteht eine elektrische Verbindung zwischen dem Fahrzeug-Powerlinemodem 15 und dem Station-Powerlinemodem 16, über dem eine Powerline Kommunikation erfolgen kann. Damit kann der Verriegelungsstatus vom Fahrzeug-Powerlinemodem 15 zum Station-Powerlinemodem 16 übertragen werden. Hierfür kann ein beliebiges Datenkommunikationsprotokoll implementiert sein. Für die Übertragung des Verriegelungsstatus kann daher auf bestehende Einrichtungen, insbesondere eine bestehende elektrische Installation, der Seilbahn 1 zurückgegriffen werden. Lediglich Powerlinemodems 15, 16 sind zusätzlich vorzusehen, was aber mit geringem Aufwand und Kosten möglich ist.

Die Verriegelungsauswerteeinheit 14 kann als mikroprozessorbasierte Hardware ausgeführt sein, auf der Auswertesoftware läuft, beispielsweise in Form eines Embedded Controller oder Mikrocontroller. Auch eine Implementierung als integrierter Schaltkreis (IC), beispielsweise als anwendungsspezifische integrierte Schaltung (ASIC) oder Field Programmable Gate Array (FPGA), ist denkbar. Die Verriegelungsauswerteeinheit 14 kann auch als analoger Schaltkreis implementiert sein. Die Powerlinemodem 15, 16 sind üblicherweise elektronische Bauteile, unter Umständen auch mit einem Mikroprozessor und Firmware.

Die Verriegelungsauswerteeinheit 14 kann ebenfalls über die Zuleitung 22 mit elektrischer Energie versorgt werden. Alternativ oder zusätzlich kann am Fahrzeug 4 ein elektrischer Energiespeicher 20 zur Versorgung der Verriegelungsauswerteeinheit 14 vorgesehen sein. Vorzugsweise ist die Verriegelungsauswerteeinheit 14 aktiv, wenn der Stromabnehmer 11 mit der ersten Stromschiene 10 verbunden ist. Dabei kann die Zuleitung 22 unter elektrischer Spannung stehen und die Verriegelungsauswerteeinheit 14 kann vorteilhaft von der Stromschiene 10 mit elektrischer Energie versorgt werden. Hierfür kann bedarfsweise auch ein Spannungswandler 19 vorgesehen sein, um die Versorgungsspannung der Stromschiene 10, z.B. 24VDC für einen elektrischen Verschlussantrieb 3, auf eine benötigte Versorgungsspannung der Verriegelungsauswerteeinheit 14, z.B. 5VDC, zu wandeln.

Zwischen dem Fahrzeug-Powerlinemodem 15 oder dem Station-Powerlinemodem 16 (oder auch beiden) und dem Stromabnehmer 11 bzw. der ersten Stromschiene 10 kann auch ein bekanntes Powerline-Kopplungsnetzwerk, beispielsweise ein Transformator, ein Filter usw., vorgesehen sein. Ein solches Powerline-Kopplungsnetzwerk kann natürlich auch im jeweiligen Powerlinemodem 15, 16 integriert sein.

Ebenso kann am Fahrzeug 4 ein elektrischer Energiespeicher 20 für die Powerline Kommunikation vorgesehen sein. Der elektrische Energiespeicher 20 kann über die Stromschiene 10 und die Zuleitung 22 geladen werden, wenn das Fahrzeug 4 über den Stromabnehmer 11 damit verbunden ist. Wenn das Fahrzeug 4 nicht mit der Stromschiene 10 verbunden ist, kann mit dem elektrischen Energiespeicher 20, der mit dem Stromabnehmer 11 bzw. der Zuleitung 22 verbunden ist, auch eine elektrische Versorgung gewisser Verbraucher 12 des Fahrzeugs 4 zumindest für eine bestimmten Zeitspanne aufrechterhalten werden. Der elektrische Energiespeicher 20 kann beispielsweise als Pufferspeicher in Form eines Superkondensator ausgeführt sein, mit dem zumindest eine Powerline Kommunikation für eine benötigte Zeitspanne hergestellt und durchgeführt werden kann.

In der Zuleitung 22 kann zwischen dem Verschlussantrieb 3 und dem elektrischen Energiespeicher 20 auch ein Gleichrichter 23 vorgesehen sein, beispielsweise ein Dioden-Brückengleichrichter. Der Gleichrichter 23 kann aus einer bipolaren Versorgungsspannung (z.B. ±24VDC) oder einer Wechselspannung als Versorgungsspannung eine unipolare Speisespannung für die Verriegelungsauswerteeinheit 14 erzeugen, auch über einen Spannungswandler 19. Gleichzeitig stellt der Gleichrichter 23 auch die Rückwirkungsfreiheit des elektrischen Energiespeichers 20 in Richtung eines elektrischen Verschlussantriebs 3 sicher, weil der Gleichrichter keinen Energiefluss in die entgegengesetzte Richtung zulässt. Der Gleichrichter 23 darf natürlich nicht die Powerline Kommunikation unterbrechen und ist daher im Fahrzeug 4 entsprechend anzuordnen. Das Fahrzeug-Powerlinemodem 15 ist dazu beispielsweise zwischen dem Stromabnehmer 11 und dem Gleichrichter 23 mit der Zuleitung 22 verbunden.

Um Störungen durch die Powerline Kommunikation über die elektrischen Leitungen zu verhindern, kann vor einem Verbraucher 12 oder dem Verschlussantrieb 3 auch ein Tiefpassfilter zur Entkopplung der Versorgungsspannung und der Powerline Kommunikation vorgesehen sein. Dasselbe kann natürlich auch auf Stationsseite vor der Stromversorgung 17 vorgesehen sein.

Zur Überwachung des Verriegelungsstatus einer Verschlusseinrichtung 5 eines Fahrzeugs 4 einer Seilbahn 1 ist vorgesehen, dass der Stromabnehmer 11 des Fahrzeugs 4 bei Durchfahrt durch die Station 2 in einer Bewegungsrichtung zumindest nach dem Schließen und Verriegeln der Verschlusseinrichtung 5 eine erste, in der Station 2 angeordnete Stromschiene 10 kontaktiert. Die erste Stromschiene 10 ist wie oben erläutert über ein erstes Station-Powerlinemodem 16 mit der Seilbahnsteuerung 13 verbunden und der Stromabnehmer 11 am Fahrzeug 4 ist mit einem Fahrzeug-Powerlinemodem verbunden. Nach dem Schließen und Verriegeln der Verschlusseinrichtung 5 wird der Verriegelungsstatus von der Verriegelungsauswerteeinheit 14 von der Verriegelungsüberwachung 8 abgefragt und mit einer Powerline Kommunikation mit dem Fahrzeug-Powerlinemodem 15 über die Stromschiene 10 und das erste Station-Powerlinemodem 16 an die Seilbahnsteuerung 10 gesendet. Im Falle einer fehlerhaften Verriegelung der Verschlusseinrichtung 5 wird die Seilbahn 1 von der Seilbahnsteuerung 13 gestoppt, wodurch das Fahrzeug 4 nach einer bestimmten Wegstrecke zum Stillstand kommt. In der Station 2 ist eine zweite Stromschiene 10` angeordnet, die mit einem zweiten Station-Powerlinemodem 16` mit der Seilbahnsteuerung 13 verbunden ist. Diese zweite Stromschiene 10` ist derart in Bewegungsrichtung nach der ersten Stromschiene 10 angeordnet, sodass das Fahrzeug 4 nach dem Stoppen im Bereich der zweiten Stromschiene 10` zum Stillstand kommt. Das im Bereich der zweiten Stromschiene 10` stehende Fahrzeug 4 übermittelt zumindest einmal den Verriegelungsstatus erneut mit dem Fahrzeug-Powerlinemodem 15 über die zweite Stromschiene 10` und das zweite Station-Powerlinemodem 16' an die Seilbahnsteuerung 13. Hierfür wird der Verriegelungsstatus erneut von der Verriegelungsauswerteeinheit 14 von der Verriegelungsüberwachung 8 erfasst. Die Seilbahn 1 wird von der Seilbahnsteuerung 13 nur dann gestartet, wenn mit dem erneut übermittelten Verriegelungsstatus eine ordnungsgemäße Verriegelung der Verschlusseinrichtung 5 signalisiert wurde.

Anstelle einer separaten zweiten Stromschiene 10` könnte aber auch die erste Stromschiene 10 entsprechend länger ausgeführt werden. Die erste Stromschiene 10 ist so lange auszuführen, dass das Fahrzeug 4 nach dem Stoppen im Bereich der Stromschiene 10 zum Stillstand kommt. Damit würde auch nur ein Station-Powerlinemodem 16 zur Powerline Kommunikation ausreichen.

Bei Verwendung von zwei separaten Stromschienen 10, 10' ist es auch möglich, nur eine Stromversorgung 17 vorzusehen und die beiden Stromschienen 10, 10' elektrisch zu verbinden. Damit würde auch nur ein Station-Powerlinemodem 16 zur Powerline Kommunikation ausreichen.

Der Vorteil von zwei separaten und elektrisch getrennten Stromschienen 10, 10' liegt darin, dass die Längen der Stromschienen 10, 10' so ausgelegt werden können, dass sich immer nur ein Fahrzeug 4 im Bereich einer Stromschiene 10, 10' befinden kann, was die Datenkommunikation erleichtern kann.

Während des Schließens und Verriegelns muss das Fahrzeug 4 aber nicht zwingend über den Stromabnehmer 11 mit einer Stromschiene 10, 10' verbunden sein, auch nicht während der Abfrage des Verriegelungsstatus von der Verriegelungsüberwachung 8 durch die Verriegelungsauswerteeinheit 14. Lediglich zum Zeitpunkt der Übermittlung des Verriegelungsstatus mittels Powerline Kommunikation mit dem Fahrzeug-Powerlinemodem 15 vom Fahrzeug 4 über eine Stromschiene 10, 10` zu einem Station-Powerlinemodem 16, 16' muss das Fahrzeug 4 über dem Stromabnehmer 11 mit der Stromschiene 10, 10' verbunden sein.

Sobald der Stromabnehmer 11 des Fahrzeugs 4 eine Stromschiene 10, 10' in der Station 2 kontaktiert kann der Verbindungsaufbau zur Powerline Kommunikation erfolgen. Die Stromschienen 10, 10' sind damit zumindest dort in der Station 2 angeordnet, wo eine Powerline Kommunikation zur Übermittlung des Verriegelungsstatus erforderlich ist. Im einfachsten Fall stellen das Fahrzeug-Powerlinemodem 15 und das Station-Powerlinemodem 16, 16' eine bestehende Verbindung fest, beispielsweise durch Empfang einer von einem der verbundenen Powerlinemodems 15, 16, 16' gesendeten Trägerfrequenz, und starten die Powerline Kommunikation. Der Verbindungsaufbau kann auch das Hochfahren der Verriegelungsauswerteeinheit 14 und des Fahrzeug-Powerlinemodems 15 umfassen, beispielsweise wenn diese vorher ohne Stromversorgung waren und nun über die Stromschiene 10 elektrisch versorgt werden oder vorher keine Powerline Kommunikation durchzuführen war. Gleichzeitig kann dabei auch eine elektrische Verschlusssteuerung des Verschlussantriebs 3 des Fahrzeugs 4 hochfahren, wenn diese über die Stromschiene 10 mit elektrischer Energie versorgt wird. "Hochfahren" bedeutet beispielsweise, dass das Fahrzeug-Powerlinemodem 15 die Trägerfrequenz der Powerline Kommunikation erzeugt und vom Fahrzeug-Powerlinemodem 15 an den Stromabnehmer 11 angelegt wird, womit die Powerline Kommunikation erfolgen kann. Das dauert typischerweise ungefähr 1 bis 2 Sekunden.

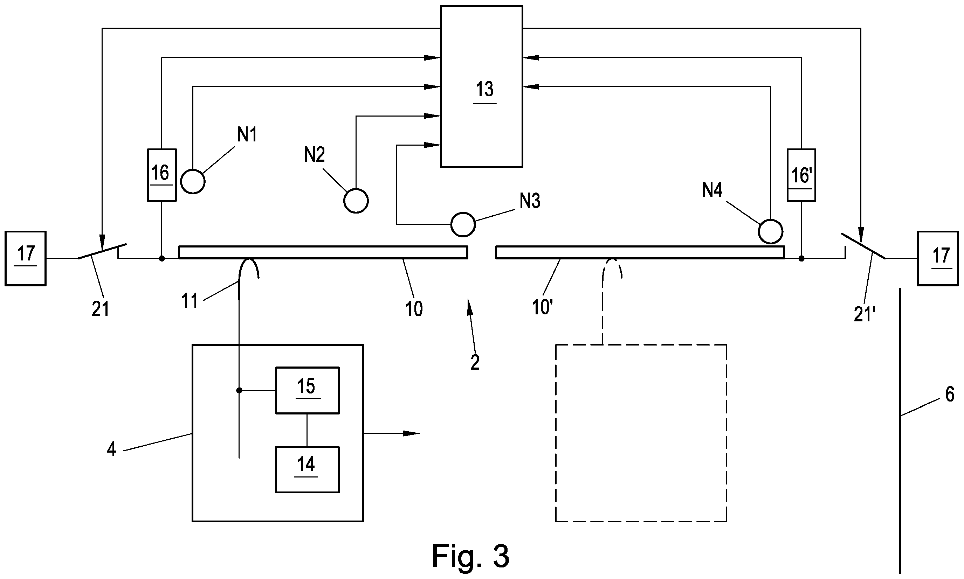

Die Funktion der Überwachung der Verriegelung der Verschlusseinrichtung 5 mit der Verrieglungseinheit 7 wird nachfolgend mit Bezugnahme auf die Fig.3 erläutert, die eine vorteilhafte Ausführung der Verriegelungsüberwachung zeigt. Das Beispiel zeigt das Schließen der Verschlusseinrichtung 5 des Fahrzeugs 4 vor der Ausfahrt des Fahrzeugs 4 aus der Station 2.

Das Fahrzeug 4 bewegt sich in Bewegungsrichtung (angedeutet durch den Pfeil) durch die Station 2. Wenn das Fahrzeug 4 im Bereich einer ersten Stromschiene 10 kommt, wird die Stromschiene 10 aktiviert, beispielsweise indem die Trenneinheit 21 der Stromversorgung 17 (die vorher offen war) geschlossen wird. Das erfolgt vorzugsweise nachdem der Stromabnehmer 11 die Stromschiene 10 kontaktiert hat, um Funkenüberschlag zu verhindern. Hierfür kann beispielsweise ein erster Näherungsschalter N1 in der Station 2 vorgesehen sein, der die Position des Fahrzeugs 4 erkennt. Die Position des Fahrzeugs 4 in der Station 2, insbesondere relativ zur Stromschiene 10, kann aber natürlich auch auf beliebig andere Weise erkannt werden, beispielsweise durch die Auswertung der bekannten Geschwindigkeiten des Fahrzeugs 4 in der Station 2.

Es sei aber angemerkt, dass die erste Stromschiene 10 auch schon vor dem Kontakt des Stromabnehmer 11 oder auch permanent bestromt sein kann, beispielsweise wenn der entstehende Funkenüberschlag kein Problem darstellt. Eine Unterbrechung des Stromflusses zum Zeitpunkt des Kontaktes um Funken zu vermeiden, könnte aber auch fahrzeugseitig implementiert sein. Bei diesen Ausführungsformen kann auch auf den ersten Näherungsschalter N1 verzichtet werden.

Wenn die erste Stromschiene 10 nur zur Powerline Kommunikation genutzt wird und nicht dazu, um elektrische Energie von der Station 2 auf das Fahrzeug 4 zu übertragen, dann kann auf den ersten Näherungsschalter N1 ebenso verzichtet werden.

Bei Weiterfahrt des Fahrzeugs 4 schließt der Verschlussantrieb 3 die Verschlusseinrichtung 5 und die Verriegelungseinheit 7 verriegelt die Verschlusseinrichtung 5. Vorzugsweise versorgt die erste Stromschiene 10 einen elektrischen Verschlussantrieb 3 mit elektrischer Energie. In diesem Fall ist die Länge und der Beginn der Stromschiene 10 in der Station 2 in Abhängigkeit von der Zeit, die für die Betätigung des Verschlussantrieb 3 benötigt wird, entsprechend anzupassen. Nach dem Schließen und Verriegeln der Verschlusseinrichtung 5 wird der Verriegelungsstatus von der Verriegelungsauswerteeinheit 14 über die Verrieglungsüberwachung 8 erfasst. Der Schließvorgang kann beispielsweise beginnen, sobald die Verschlusssteuerung des elektrischen Verschlussantriebs 3 hochgefahren ist, oder eine bestimmte Zeitspanne oder Wegstrecke nach dem ersten Näherungsschalter N1, oder wenn eine bestimmte Position des Fahrzeugs 4 relativ zur Stromschiene 10 erreicht wurde.

Es kann auch vorgesehen sein, über die Polarität der an der Stromschiene 10 anliegenden Versorgungsspannung, beispielsweise ±24VDC, einem elektrischen Verschlussantrieb 3 einen Schließbefehl oder Öffnungsbefehl zu geben. Beispielsweise könnte eine positive Spannung das Öffnen bewirken und eine negative Spannung das Schließen.

Nach dem Schließen und Verriegeln der Verschlusseinrichtung 5 wird die Stromschiene 10 in diesem Ausführungsbeispiel deaktiviert. Auch hierfür kann ein zweiter Näherungsschalter N2 vorgesehen sein, mit dem der Seilbahnsteuerung 13 eine bestimmte Position des Fahrzeugs 4 im Bereich der Stromschiene 10 signalisiert wird. Wie vorhin, kann anstelle des zweiten Näherungssensors N2 auch eine andere Positionserkennung vorgesehen sein. Beim Deaktivieren ist der Stromabnehmer 11 noch in Kontakt mit der Stromschiene 10 und das Deaktivieren kann durch die Seilbahnsteuerung 13 durch das Öffnen der Trenneinheit 21 der Stromversorgung 17 erfolgen. Nach dem Deaktivieren der Stromschiene 10 versorgt der elektrische Energiespeicher 20 das Fahrzeug-Powerlinemodem 15 und die Verriegelungsauswerteeinheit 14 mit elektrischer Energie, zumindest für eine hinreichend lange Zeitspanne.

Zwischen dem Zeitpunkt der Deaktivierung der Stromschiene 10 und dem Erreichen des Endes der Stromschiene 10, an dem der Kontakt zwischen dem Stromabnehmer 11 und der Stromschiene 10 durch die Bewegung des Fahrzeugs 4 unterbrochen wird, erfolgt die Powerline Kommunikation zur Übermittlung des Verriegelungsstatus an die Seilbahnsteuerung 13 mittels der Powerlinemodems 15, 16. Der elektrische Energiespeicher 20 wird daher entsprechend dimensioniert, um die für die Powerline Kommunikation benötigte elektrische Leistung bereitstellen zu können. Das Ende der Stromschiene 10 kann wieder mittels eines dritten Näherungsschalters N3 erkannt werden, oder durch eine beliebige andere Positionserkennung.

Falls nur eine Stromschiene 10 verwendet wird, kann der Näherungsschalter N3 natürlich entfallen.

Wurde als Verriegelungsstatus die korrekte Verriegelung an die Seilbahnsteuerung 13 gemeldet, passiert das Fahrzeug 4 das Ende der Stromschiene 10 und die zweite Stromschiene 10` bleibt deaktiviert und das Fahrzeug 4 fährt aus der Station 2 aus. Dasselbe gilt in analoger Weise, wenn nur eine einzige Stromschiene 10 verwendet wird.

Wurde als Verriegelungsstatus hingegen eine fehlerhafte Verriegelung an die Seilbahnsteuerung 13 gemeldet, stoppt die Seilbahnsteuerung 13 die Seilbahn 1 aufgrund der fehlerhaften Verriegelung. Nach einem bestimmten Bremsweg kommt das Fahrzeug 4 zum Stillstand (in Fig.3 strichliert angedeutet). In Bewegungsrichtung nach der ersten Stromschiene 10 ist in der Station 2 eine zweite Stromschiene 10` angeordnet. Diese zweite Stromschiene 10' wird in der Station 2 so angeordnet, dass das Fahrzeug 4 bei allen möglichen Fahrgeschwindigkeiten des Fahrzeugs 4 am Ende der ersten Stromschiene 10 im Bereich der zweiten Stromschiene 10' und nicht im Zwischenraum zwischen den beiden Stromschiene 10, 10' zum Stillstand kommt. Bei einem Nothalt der Seilbahn 1 aufgrund einer fehlerhaften Verriegelung am Ende der ersten Stromschiene 10 muss somit zumindest der Weg zwischen den beiden Stromschiene 10, 10' und maximal der Weg bis zum Ende der zweiten Stromschiene 10' zurückgelegt werden.

Bei nur einer Stromschiene 10 ist deren Länge so zu dimensionieren, dass das Fahrzeug 4 bei allen möglichen Fahrgeschwindigkeiten des Fahrzeugs 4 bei einem Nothalt aufgrund einer fehlerhaften Verriegelung im Bereich der Stromschiene 10 zum Stillstand kommt.

Somit ist sichergestellt, dass das Fahrzeug 4, unabhängig von der Fahrgeschwindigkeit vor der Abschaltung der Seilbahn 1, immer im Bereich einer Stromschiene 10, 10` zum Stillstand kommt. Das Fahrzeug 4 kontaktiert im Stillstand über den Stromabnehmer 11 die Stromschiene 10, 10`. Das kann auch durch einen vierten Näherungsschalter N4 am Ende der Stromschiene 10, 10', oder durch eine anderweitige Positionserkennung, überprüft werden. Eine derartige Auslegung kann der Fachmann einfach vornehmen. Damit wird auch sichergestellt, dass das Fahrzeug 4 innerhalb der Station 2 stoppt, bevor das Fahrzeug die Stationsausfahrt 6 erreicht und aus der Station 2 ausfährt.

Im Stillstand des Fahrzeugs 4 im Bereich der zweiten Stromschiene 10` kann die zweite Stromschiene 10' aktiviert werden, beispielsweise durch die Seilbahnsteuerung 13, die eine zweite Trenneinheit 21' zum Verbinden der zweiten Stromschiene 10' mit einer Stromversorgung 17 schließt. Die Stromversorgung 17 kann dieselbe sein, wie für die erste Stromschiene 10 vorgesehen, kann aber auch eine andere sein. Auch bei Verwendung nur einer Stromschiene 10 oder von zwei separaten, aber elektrisch verbundenen Stromschienen 10, 10' kann diese erneut aktiviert werden, sofern diese vorher deaktiviert wurde.

Es sei aber angemerkt, dass die zweite Stromschiene 10` auch schon vor dem Kontakt des Stromabnehmer 11 oder auch permanent bestromt sein kann, beispielsweise wenn der entstehende Funkenüberschlag kein Problem darstellt. Eine Unterbrechung des Stromflusses zum Zeitpunkt des Kontaktes um Funken zu vermeiden, könnte aber auch fahrzeugseitig implementiert sein. Wenn die zweite Stromschiene 10` nur zur Powerline Kommunikation genutzt wird und nicht dazu, um elektrische Energie von der Station 2 auf das Fahrzeug 4 zu übertragen, dann muss die zweite Stromschiene 10' gar nicht bestromt werden, womit auch die zweite Trenneinheit 21' entfallen könnte.

Im Stillstand des Fahrzeugs 4 nach dem Nothalt im Bereich einer Stromschiene 10, 10' ist das Wiederanfahren der Seilbahn 1 durch die Seilbahnsteuerung 13 gesperrt, bis die Verriegelung der Verschlusseinrichtung 5 erfolgt ist. Dazu wird der Verriegelungsstatus der Verrieglungseinheit 7 im Bereich der Stromschiene 10, 10` zumindest einmal erneut ermittelt und per Powerline Kommunikation über die Stromschiene 10, 10` und das zweite Station-Powerlinemodem 16, 16' an die Seilbahnsteuerung 13 übermittelt. Im Ausführungsbeispiel nach Fig.3 erfolgt die Powerline Kommunikation zur Übermittlung des Verriegelungsstatus beispielsweise über das Fahrzeug-Powerlinemodem 15 und das zweite Station-Powerlinemodem 16`, das mit der zweiten Stromschiene 10' und mit der Seilbahnsteuerung 13 in Verbindung ist.

Die Überprüfung und/oder Herstellung der ordnungsgemäßen Verriegelung kann durch das Bedienpersonal der Seilbahn 1 erfolgen. Beispielsweise kann das Bedienpersonal das stillstehende Fahrzeug 4 im Bereich der Stromschiene 10, 10' manuell prüfen und gegebenenfalls die Verriegelung manuell vornehmen. Der Verriegelungsstatus kann dabei in gewissen Zeitabständen von der Verriegelungsauswerteeinheit 14 abgefragt und an die Seilbahnsteuerung 13 übermittelt werden.

Es kann aber auch eine bidirektionale Powerline Kommunikation vorgesehen sein, womit die Seilbahnsteuerung 13 die Übermittlung des Verriegelungsstatus vom Fahrzeug 4 anstoßen kann, beispielsweise mittels eines mit Powerline Kommunikation übertragenen Befehls an die Verriegelungsauswerteeinheit 14.

Eine solche bidirektionale Powerline Kommunikation kann auch genutzt werden, um das Öffnen oder Schließen der Verschlusseinrichtung 5 oder der Verriegelung von einer Bedienstation aus anzustoßen. Dabei kann nach jedem Schließen der Verriegelungsstatus abgefragt und an die Seilbahnsteuerung 13 übermittelt werden.

Kann auf diese Weise die Verriegelung der Verschlusseinrichtung 5 hergestellt werden, kann die Seilbahnsteuerung 13 die Seilbahn 1 wieder starten und das Fahrzeug 4 kann aus der Station 2 ausfahren. Es kann vorgesehen sein, dass die Seilbahnsteuerung 13 die Seilbahn 1 automatisch wieder startet, wenn die korrekte Verriegelung erkannt wird, oder erst dann, wenn das Bedienpersonal den vorherigen Fehlerzustand in der Seilbahnsteuerung 13 quittiert.

Kann die Verriegelung nicht wiederhergestellt werden, beispielsweise wegen eines Defekts am Fahrzeug 4, kann vorgesehen sein, die Funktion der Verriegelungsüberwachung in der Seilbahnsteuerung 13 für dieses Fahrzeug 4 einmalig zu deaktivieren. Das kann beispielsweise erfolgen, nachdem alle Personen das Fahrzeug 4 verlassen haben, oder wenn die korrekte Verriegelung der Verschlusseinrichtung 5 manuell vom Bedienpersonal geprüft wurde. Das Fahrzeug 4 kann dann beispielsweise aus dem Betrieb ausgeschleust werden.

Aufgrund der redundanten Kontrolle des Verriegelungsstatus kann eine ausreichende Fehlersicherheit der Verriegelungsüberwachung hergestellt werden. Durch Fehler in der Datenübertragung des Verriegelungsstatus über Powerline Kommunikation könnte der Seilbahnsteuerung 13 eine korrekte Verriegelung signalisiert werden, obwohl die Verriegelung der Verschlusseinrichtung 5 am Fahrzeug nicht korrekt erfolgte. Damit könnte das Fahrzeug 4 mit nicht ordnungsgemäßer Verrieglung der Verschlusseinrichtung 5 aus der Station 2 ausfahren. Um solche Fehler in der Datenübertragung zu verhindern, können im Datenkommunikationsprotokoll der Powerline Kommunikation hinreichend bekannte Fehlerkorrekturverfahren der digitalen Datenübertragung genutzt werden. Solche Fehlerkorrekturverfahren fügen den zu übertragenden Nutzdaten (Verriegelungsstatus) in der Regel zusätzliche Redundanz hinzu, meist in Form zusätzlicher Bits, die auf der Zielseite zum Erkennen von Fehlern und zum Bestimmen der Fehlerposition genutzt wird. Hierzu können für die Datenübertragung auch fehlererkennende und fehlerkorrigierende Codes eingesetzt werden.

## Patentansprüche

1. Verfahren zum Betreiben einer Seilbahn (1) mit zumindest einem Fahrzeug (4), wobei zumindest in einer Station (2) der Seilbahn (1) eine Verschlusseinrichtung (5) des Fahrzeugs (4) mit einem Verschlussantrieb (3) geschlossen wird und die verschlossene Verschlusseinrichtung (5) durch eine Verrieglungseinheit (7) verriegelt wird, wobei ein Verriegelungsstatus der Verrieglungseinheit (7) von einer Verriegelungsüberwachung (8) erfasst und an eine Seilbahnsteuerung (13) der Seilbahn (1) übermittelt wird, und das Ausfahren des Fahrzeugs (1) aus der Station (2) im Falle einer fehlerhaften Verriegelung durch die Seilbahnsteuerung (13) verhindert wird, **dadurch gekennzeichnet, dass** ein Stromabnehmer (11) des Fahrzeugs (4) bei Durchfahrt durch die Station (2) in einer Bewegungsrichtung zumindest nach dem Schließen und Verriegeln der Verschlusseinrichtung (5) eine erste Stromschiene (10) kontaktiert, wobei die erste Stromschiene (10) über ein erstes Station-Powerlinemodem (16) mit der Seilbahnsteuerung (13) verbunden wird und der Stromabnehmer (11) am Fahrzeug (4) mit einem Fahrzeug-Powerlinemodem (15) verbunden wird, dass eine Verriegelungsauswerteeinheit (14) nach dem Schließen und Verriegeln der Verschlusseinrichtung (5) den Verriegelungsstatus von der Verriegelungsüberwachung (8) abfragt und mit einer Powerline Kommunikation mit dem Fahrzeug-Powerlinemodem (15) über die erste Stromschiene (10) und das erste Station-Powerlinemodem (16) an die Seilbahnsteuerung (13) sendet, **und** im Falle einer fehlerhaften Verriegelung die Seilbahn (1) von der Seilbahnsteuerung (13) gestoppt wird, wodurch das Fahrzeug (4) im Bereich der ersten Stromschiene (10) oder einer in Bewegungsrichtung nach der ersten Stromschiene (10) angeordneten zweiten Stromschiene (10`) zum Stillstand kommt, wobei die zweite Stromschiene (10') mit dem ersten Station-Powerlinemodem (16) oder mit einem zweiten, mit der Seilbahnsteuerung (13) verbundenen Station-Powerlinemodem (16') verbunden wird, **und dass** während des im Bereich der ersten oder zweiten Stromschiene (10, 10') stehenden Fahrzeugs zumindest einmal der Verriegelungsstatus von der Verriegelungsüberwachung (8) abgefragt wird und der Verriegelungsstatus erneut mit dem Fahrzeug-Powerlinemodem (15) über die erste oder zweite Stromschiene (10, 10') und das zugehörige Station-Powerlinemodem (16, 16') an die Seilbahnsteuerung (13) gesendet wird und die Seilbahn (1) von der Seilbahnsteuerung (13) gestartet wird, wenn mit dem erneut übermittelten Verriegelungsstatus eine ordnungsgemäße Verriegelung signalisiert wurde.

2. Verfahren nach Anspruch 1, **dadurch gekennzeichnet, dass** die Verriegelungsauswerteeinheit (14) und das Fahrzeug-Powerlinemodem (15) über die erste oder zweite Stromschiene (10, 10') oder durch einen elektrischen Energiespeicher (20) am Fahrzeug (4) mit elektrischer Energie versorgt werden.

3. Verfahren nach Anspruch 1, **dadurch gekennzeichnet, dass** der Stromabnehmer (11) des Fahrzeugs (4) bei Durchfahrt durch die Station (2) in einer Bewegungsrichtung vor dem Schließen der Verschlusseinrichtung (5) die erste Stromschiene (10) kontaktiert und der Verschlussantrieb (3) als elektrischer Antrieb ausgeführt wird, wobei der elektrische Verschlussantrieb (3) über die erste Stromschiene (10) mit elektrischer Energie versorgt wird.

4. Verfahren nach Anspruch 3, **dadurch gekennzeichnet, dass** die erste Stromschiene (10) nach dem Verschließen und Verriegeln der Verschlusseinrichtung (5) und vor dem Senden des Verriegelungsstatus deaktiviert wird, wobei die Verriegelungsauswerteeinheit (14) und das Fahrzeug-Powerlinemodem (15) zum Übermitteln des Verriegelungsstatus mit Powerline Kommunikation von einem elektrischen Energiespeicher (20) am Fahrzeug (4) mit elektrischer Energie versorgt werden.

5. Seilbahn (1) mit einer Station (2), zumindest einem Fahrzeug (4) und einer Seilbahnsteuerung (13) zum Steuern der Seilbahn (1), wobei am Fahrzeug (4) eine Verschlusseinrichtung (5) und ein Verschlussantrieb zum Schließen der Verschlusseinrichtung (5) vorgesehen ist und am Fahrzeug (4) eine Verrieglungseinheit (7) zum Verriegeln der Verschlusseinrichtung (5) vorgesehen ist, wobei am Fahrzeug (4) eine Verriegelungsüberwachung (8) zum Erfassen des Verriegelungsstatus der Verriegelungseinheit (7) vorgesehen ist und das Fahrzeug (4) den Verriegelungsstatus an die Seilbahnsteuerung (13) übermittelt, und wobei die Seilbahnsteuerung (13) das Ausfahren des Fahrzeugs (4) aus der Station (2) im Falle einer fehlerhaften Verriegelung verhindert, **dadurch gekennzeichnet, dass** am Fahrzeug (4) ein Stromabnehmer (11) vorgesehen ist, der bei Durchfahrt des Fahrzeugs (4) durch die Station (2) in einer Bewegungsrichtung zumindest nach dem Schließen und Verriegeln der Verschlusseinrichtung (5) eine erste, in der Station (2) angeordnete Stromschiene (10) kontaktiert, wobei die erste Stromschiene (10) über ein erstes Station-Powerlinemodem (16) mit der Seilbahnsteuerung (13) verbunden ist und der Stromabnehmer (11) am Fahrzeug (4) mit einem Fahrzeug-Powerlinemodem (15) am Fahrzeug (4) verbunden ist, **dass** am Fahrzeug (4) eine Verriegelungsauswerteeinheit (14) vorgesehen ist, die nach dem Schließen und Verriegeln der Verschlusseinrichtung (5) den Verriegelungsstatus von der Verriegelungsüberwachung (8) abfragt und mit einer Powerline Kommunikation mit dem Fahrzeug-Powerlinemodem (15) über die erste Stromschiene (10) und das erste Station-Powerlinemodem (16) an die Seilbahnsteuerung (13) sendet, **und** die Seilbahnsteuerung (13) im Falle einer fehlerhaften Verriegelung die Seilbahn (1) stoppt, sodass das Fahrzeug (4) im Bereich der ersten Stromschiene (10) oder einer in der Station (2) in Bewegungsrichtung nach der ersten Stromschiene (10) angeordneten zweiten Stromschiene (10`) zum Stillstand kommt, wobei die zweite Stromschiene (10') mit dem ersten Station-Powerlinemodem (16) oder mit einem zweiten, mit der Seilbahnsteuerung (13) verbundenen Station-Powerlinemodem (16') verbunden ist, **dass** die Verriegelungsauswerteeinheit (14) des Fahrzeugs (4) den Verriegelungsstatus zumindest einmal von der Verriegelungsüberwachung (8) abfragt und den Verriegelungsstatus erneut mit dem Fahrzeug-Powerlinemodem (15) über die erste oder zweite Stromschiene (10, 10') und das erste oder zweite Station-Powerlinemodem (16, 16') an die Seilbahnsteuerung (13) sendet, während es im Bereich der ersten oder zweiten Stromschiene (10, 10') steht **und dass** die Seilbahnsteuerung (13) die Seilbahn (1) startet, wenn mit dem erneut übermittelten Verriegelungsstatus eine ordnungsgemäße Verriegelung signalisiert wurde.

6. Seilbahn nach Anspruch 5, **dadurch gekennzeichnet, dass** die erste oder zweite Stromschiene (10, 10') oder ein elektrischer Energiespeicher (20) am Fahrzeug (4) vorgesehen sind, um die Verriegelungsauswerteeinheit (14) und das Fahrzeug-Powerlinemodem (15) mit elektrischer Energie zu versorgen.

7. Seilbahn nach Anspruch 5, **dadurch gekennzeichnet, dass** die erste Stromschiene (10) in der Station (2) angeordnet ist, sodass der Stromabnehmer (11) des Fahrzeugs (4) bei Durchfahrt durch die Station (2) in einer Bewegungsrichtung vor dem Schließen der Verschlusseinrichtung (5) die erste Stromschiene (10) kontaktiert und der Verschlussantrieb (3) als elektrischer Antrieb ausgeführt ist, wobei die erste Stromschiene (10) den elektrischen Verschlussantrieb (3) mit elektrischer Energie versorgt.

8. Seilbahn nach Anspruch 7, **dadurch gekennzeichnet, dass** die erste Stromschiene (10) nach dem Verschließen und Verriegeln der Verschlusseinrichtung (5) und vor dem Senden des Verriegelungsstatus deaktiviert wird, und am Fahrzeug (4) ein elektrischer Energiespeicher (20) vorgesehen ist, der die Verriegelungsauswerteeinheit (14) und das Fahrzeug-Powerlinemodem (15) zum Übermitteln des Verriegelungsstatus mit elektrischer Energie versorgt.

## Claims

1. Method for operating a cableway (1) having at least one vehicle (4), wherein, at least in one station (2) of the cableway (1), a closure device (5) of the vehicle (4) is closed by means of a closure drive (3) and the closed closure device (5) is locked by a locking unit (7), wherein a locking status of the locking unit (7) is detected by a locking monitor (8) and is transmitted to a cableway controller (13) of the cableway (1), and the travel of the vehicle (1) out of the station (2) is prevented by the cableway controller (13) in the event of defective locking, **characterized in that** a current collector (11) of the vehicle (4) contacts a first busbar (10) during travel through the station (2) in a direction of movement at least after the closing and locking of the closure device (5), wherein the first busbar (10) is connected to the cableway controller (13) via a first station powerline modem (16), and the current collector (11) is connected to a vehicle powerline modem (15) on the vehicle (4), **in that,** after the closing and locking of the closure device (5), a locking evaluation unit (14) queries the locking status from the locking monitor (8) and transmits it to the cableway controller (13) with the vehicle powerline modem (15) via the first busbar (10) and the first station powerline modem (16) by means of powerline communication, **and in that,** in the event of defective locking, the cableway (1) is stopped by the cableway controller (13), as a result of which the vehicle (4) comes to a standstill in the region of the first busbar (10) or a second busbar (10') arranged after the first busbar (10) in the direction of movement, wherein the second busbar (10') is connected to the first station powerline modem (16) or to a second station powerline modem (16') connected to the cableway controller (13), **and in that,** while the vehicle is standing in the region of the first or second busbar (10, 10'), the locking status is queried at least once from the locking monitor (8) and the locking status is transmitted again to the cableway controller (13) by means of the vehicle powerline modem (15) via the first or second busbar (10, 10') and the associated station powerline modem (16, 16'), and the cableway (1) is started by the cableway controller (13) when a correct locking has been signaled by the re-transmitted locking status.

2. Method according to claim 1, **characterized in that** the locking evaluation unit (14) and the vehicle powerline modem (15) are supplied with electrical energy via the first or second busbar (10, 10') or by an electrical energy storage (20) on the vehicle (4).

3. Method according to claim 1, **characterized in that,** during travel through the station (2), the current collector (11) of the vehicle (4) contacts the first busbar (10) in a direction of movement before the closure device (5) is closed, and the closure drive (3) is designed as an electric drive, wherein the electrical closure drive (3) is supplied with electrical energy via the first busbar (10).

4. Method according to claim 3, **characterized in that** the first busbar (10) is deactivated after the closing and locking of the closure device (5) and before the locking status is transmitted, wherein the locking evaluation unit (14) and the vehicle powerline modem (15) are supplied with electrical energy for transmitting the locking status by means of powerline communication from an electrical energy storage (20) on the vehicle (4).

5. Cableway (1) having a station (2), at least one vehicle (4), and a cableway controller (13) for controlling the cableway (1), wherein a closure device (5) and a closure drive for closing the closure device (5) are provided on the vehicle (4), and a locking unit (7) for locking the closure device (5) is provided on the vehicle (4), wherein a locking monitor (8) for detecting the locking status of the locking unit (7) is provided on the vehicle (4), and the vehicle (4) transmits the locking status to the cableway controller (13), and wherein the cableway controller (13) prevents the vehicle (4) from traveling out of the station (2) in the event of defective locking, **characterized in that** a current collector (11) is provided on the vehicle (4) which contacts a first busbar (10), arranged in the station (2), when the vehicle (4) travels through the station (2) in a direction of movement at least after the closing and locking of the closure device (5), wherein the first busbar (10) is connected to the cableway controller (13) via a first station powerline modem (16), and the current collector (11) on the vehicle (4) is connected to a vehicle powerline modem (15) on the vehicle (4), **in that** a locking evaluation unit (14) is provided on the vehicle (4), which, following the closing and locking of the closure device (5), queries the locking status from the locking monitor (8) and transmits it to the cableway controller (13) with the vehicle powerline modem (15) via the first busbar (10) and the first station powerline modem (16) by means of powerline communication, **and in that** the cableway controller (13) stops the cableway (1) in the event of defective locking, so that the vehicle (4) comes to a standstill in the region of the first busbar (10) or a second busbar (10') arranged in the station (2) after the first busbar (10) in the direction of movement, wherein the second busbar (10') is connected to the first station powerline modem (16) or to a second station powerline modem (16') connected to the cableway controller (13), **in that** the locking evaluation unit (14) of the vehicle (4) queries the locking status at least once from the locking monitor (8) and again transmits the locking status by means of the vehicle powerline modem (15) via the first or second busbar (10, 10') and the first or second station powerline modem (16, 16') to the cableway controller (13) while it is standing in the region of the first or second busbar (10, 10'), **and in that** the cableway controller (13) starts the cableway (1) when a correct locking has been signaled by the re-transmitted locking status.

6. Cableway according to claim 5, **characterized in that** the first or second busbar (10, 10') or an electrical energy store (20) on the vehicle (4) are provided to supply the locking evaluation unit (14) and the vehicle powerline modem (15) with electrical energy.

7. Cableway according to claim 5, **characterized in that** the first busbar (10) is arranged in the station (2), so that, during travel through the station (2) in a direction of movement, the current collector (11) of the vehicle (4) contacts the first busbar (10) before the closure of the closure device (5), and the closure drive (3) is designed as an electric drive, wherein the first busbar (10) supplies the electrical closure drive (3) with electrical energy.

8. Cableway according to claim 7, **characterized in that** the first busbar (10) is deactivated after the closing and locking of the closure device (5) and before the transmission of the locking status, and an electrical energy storage (20) is provided on the vehicle (4) which supplies electrical energy to the locking evaluation unit (14) and the vehicle powerline modem (15) for transmitting the locking status.

## Revendications

1. Procédé permettant de faire fonctionner un téléphérique (1) comportant au moins un véhicule (4), dans lequel, au moins dans une station (2) du téléphérique (1), un dispositif de fermeture (5) du véhicule (4) est fermé au moyen d'un entraînement de fermeture (3) et le dispositif de fermeture (5) fermé est verrouillé par une unité de verrouillage (7), dans lequel un état de verrouillage de l'unité de verrouillage (7) est détecté par un moyen de surveillance de verrouillage (8) et est transmis à une commande de téléphérique (13) du téléphérique (1), et la sortie du véhicule (1) hors de la station (2) est empêchée par la commande de téléphérique (13) en cas de verrouillage défectueux, **caractérisé en ce qu'**un pantographe (11) du véhicule (4) entre en contact avec un premier rail conducteur (10) lors d'un passage à travers la station (2) dans un sens de déplacement au moins après la fermeture et le verrouillage du dispositif de fermeture (5), dans lequel le premier rail conducteur (10) est connecté à la commande de téléphérique (13) par l'intermédiaire d'un premier modem à courants porteurs en ligne de station (16) et le pantographe (11) est connecté à un modem à courants porteurs en ligne de véhicule (15) au niveau du véhicule (4), **en ce qu'**une unité d'évaluation de verrouillage (14) extrait l'état de verrouillage à partir du moyen de surveillance de verrouillage (8) après la fermeture et le verrouillage du dispositif de fermeture (5) et l'envoie à la commande de téléphérique (13) au moyen d'une communication par courants porteurs en ligne avec le modem à courants porteurs en ligne de véhicule (15) par l'intermédiaire du premier rail conducteur (10) et du premier modem à courants porteurs en ligne de station (16), et, en cas de verrouillage défectueux, le téléphérique (1) est arrêté par la commande de téléphérique (13), moyennant quoi le véhicule (4) est mis à l'arrêt dans la zone du premier rail conducteur (10) ou d'un second rail conducteur (10`) disposé après le premier rail conducteur (10) dans le sens de déplacement, dans lequel le second rail conducteur (10') est connecté au premier modem à courants porteurs en ligne de station (16) ou à un second modem à courants porteurs en ligne de station (16`) connecté à la commande de téléphérique (13), **et en ce que**, pendant que le véhicule est à l'arrêt dans la zone du premier ou du second rail conducteur (10, 10'), l'état de verrouillage est extrait au moins une fois à partir du moyen de surveillance de verrouillage (8) et l'état de verrouillage est à nouveau envoyé à la commande de téléphérique (13) au moyen du modem à courants porteurs en ligne de véhicule (15) par l'intermédiaire du premier ou du second rail conducteur (10, 10') et du modem à courants porteurs en ligne de station (16, 16`) correspondant et le téléphérique (1) est démarré par la commande de téléphérique (13) si un verrouillage correct a été signalé au moyen de l'état de verrouillage transmis à nouveau.

2. Procédé selon la revendication 1, **caractérisé en ce que** l'unité d'évaluation de verrouillage (14) et le modem à courants porteurs en ligne de véhicule (15) sont alimentés en énergie électrique par l'intermédiaire du premier ou du second rail conducteur (10, 10') ou par un accumulateur d'énergie électrique (20) au niveau du véhicule (4).

3. Procédé selon la revendication 1, **caractérisé en ce que** le pantographe (11) du véhicule (4) entre en contact avec le premier rail conducteur (10) lors d'un passage à travers la station (2) dans un sens de déplacement avant la fermeture du dispositif de fermeture (5) et l'entraînement de fermeture (3) est réalisé sous forme d'entraînement électrique, dans lequel l'entraînement de fermeture (3) électrique est alimenté en énergie électrique par l'intermédiaire du premier rail conducteur (10).

4. Procédé selon la revendication 3, **caractérisé en ce que** le premier rail conducteur (10) est désactivé après la fermeture et le verrouillage du dispositif de fermeture (5) et avant l'envoi de l'état de verrouillage, dans lequel l'unité d'évaluation de verrouillage (14) et le modem à courants porteurs en ligne de véhicule (15) sont alimentés en énergie électrique pour la transmission de l'état de verrouillage au moyen d'une communication par courants porteurs en ligne par un accumulateur d'énergie électrique (20) au niveau du véhicule (4).

5. Téléphérique (1) comportant une station (2), au moins un véhicule (4) et une commande de téléphérique (13) pour la commande du téléphérique (1), dans lequel un dispositif de fermeture (5) et un entraînement de fermeture pour la fermeture du dispositif de fermeture (5) sont prévus au niveau du véhicule (4) et une unité de verrouillage (7) pour le verrouillage du dispositif de fermeture (5) est prévue au niveau du véhicule (4), dans lequel un moyen de surveillance de verrouillage (8) est prévu au niveau du véhicule (4) pour la détection de l'état de verrouillage de l'unité de verrouillage (7) et le véhicule (4) transmet l'état de verrouillage à la commande de téléphérique (13), et dans lequel la commande de téléphérique (13) empêche la sortie du véhicule (4) hors de la station (2) en cas de verrouillage défectueux, **caractérisé en ce qu'**un pantographe (11) est prévu au niveau du véhicule (4), lequel pantographe entre en contact avec un premier rail conducteur (10) disposé dans la station (2) lors d'un passage du véhicule (4) à travers la station (2) dans un sens de déplacement au moins après la fermeture et le verrouillage du dispositif de fermeture (5), dans lequel le premier rail conducteur (10) est connecté à la commande de téléphérique (13) par l'intermédiaire d'un premier modem à courants porteurs en ligne de station (16) et le pantographe (11) au niveau du véhicule (4) est connecté à un modem à courants porteurs en ligne de véhicule (15) au niveau du véhicule (4), **en ce qu'**une unité d'évaluation de verrouillage (14) est prévue au niveau du véhicule (4), laquelle extrait l'état de verrouillage à partir du moyen de surveillance de verrouillage (8) après la fermeture et le verrouillage du dispositif de fermeture (5) et l'envoie à la commande de téléphérique (13) au moyen d'une communication par courants porteurs en ligne avec le modem à courants porteurs en ligne de véhicule (15) par l'intermédiaire du premier rail conducteur (10) et du premier modem à courants porteurs en ligne de station (16), et, en cas de verrouillage défectueux, la commande de téléphérique (13) arrête le téléphérique (1) de sorte que le véhicule (4) est mis à l'arrêt dans la zone du premier rail conducteur (10) ou d'un second rail conducteur (10`) disposé après le premier rail conducteur (10) dans le sens de déplacement dans la station (2), dans lequel le second rail conducteur (10') est connecté au premier modem à courants porteurs en ligne de station (16) ou à un second modem à courants porteurs en ligne de station (16) connecté à la commande de téléphérique (13), **en ce que** l'unité d'évaluation de verrouillage (14) du véhicule (4) extrait au moins une fois l'état de verrouillage à partir du moyen de surveillance de verrouillage (8) et envoie à nouveau l'état de verrouillage à la commande de téléphérique (13) au moyen du modem à courants porteurs en ligne de véhicule (15) par l'intermédiaire du premier ou du second rail conducteur (10, 10') et du premier ou du second modem à courants porteurs en ligne de station (16, 16'), pendant que le véhicule est arrêté dans la zone du premier ou du second rail conducteur (10, 10'), **et en ce que** la commande de téléphérique (13) démarre le téléphérique (1) si un verrouillage correct a été signalé au moyen de l'état de verrouillage transmis à nouveau.

6. Téléphérique selon la revendication 5, **caractérisé en ce que** le premier ou le second rail conducteur (10, 10') ou un accumulateur d'énergie électrique (20) au niveau du véhicule (4) est prévu afin d'alimenter en énergie électrique l'unité d'évaluation de verrouillage (14) et le modem à courants porteurs en ligne de véhicule (15).

7. Téléphérique selon la revendication 5, **caractérisé en ce que** le premier rail conducteur (10) est disposé dans la station (2), de sorte que le pantographe (11) du véhicule (4) entre en contact avec le premier rail conducteur (10) lors d'un passage à travers la station (2) dans un sens de déplacement avant la fermeture du dispositif de fermeture (5) et l'entraînement de fermeture (3) est réalisé sous forme d'entraînement électrique, dans lequel le premier rail conducteur (10) alimente en énergie électrique l'entraînement de fermeture (3) électrique.

8. Téléphérique selon la revendication 7, **caractérisé en ce que** le premier rail conducteur (10) est désactivé après la fermeture et le verrouillage du dispositif de fermeture (5) et avant l'envoi de l'état de verrouillage, et un accumulateur d'énergie électrique (20) est prévu au niveau du véhicule (4), lequel accumulateur d'énergie électrique alimente en énergie électrique l'unité d'évaluation de verrouillage (14) et le modem à courants porteurs en ligne de véhicule (15) pour la transmission de l'état de verrouillage.
